# EUROPEAN PATENT SPECIFICATION

(11) **EP 1 168 154 B1**
(45) Date of publication and mention of the grant of the patent: **06.10.2004**
(21) Application number: 01109116.2
(22) Date of filing: 12.04.2001
(51) Int. Cl.: G06F 3/14, G06F 13/16

(54) **Remote data processing management with visualization capability**
Entfernte Datenverarbeitungsverwaltung mit Darstellungsmöglichkeit
Gestion de traitement de données à distance avec capacité de visualisation

(43) Date of publication of application: 02.01.2002
(73) Proprietor: Agilent Technologies, Inc. (a Delaware corporation), Palo Alto, CA 94303 (US)
(72) Inventor: Metzger, Michael, 72202 Nagold (DE); Kussmaul, Paul, 71126 Gaeufelden (DE); Dippon, Thomas, 71116 Gaertringen (DE); Holzinger, Bernhard, 71034 Boeblingen (DE)
(74) Representative: Barth, Daniel

(56) References cited:
- EP-A- 0 117 281
- EP-A- 0 962 862
- WO-A-01/08017
- US-A- 5 878 248
- US-A- 6 014 133
- US-A- 6 076 084

## Description

### BACKGROUND OF THE INVENTION

The present invention relates to remote management of data processing units.

WO-A-01/08017 discloses a target controller that intercepts the Keyboard, Mouse and Video (KVM) signals of a target device and sends these to a remote controlling computer.

US-A-6,014,133 discloses a point of sales (POS) system with a local POS equipment having an own screen. Video data of the local POS equipment can be send by the local POS equipment to a remote terminal for displaying the sent information on a display of the remote terminal.

Remote management of data processing unit, as described e.g. in EP-A-962862 by the same applicant, allows management and monitoring of a data processing unit from remote. While in the past such remote management has mainly encompassed monitoring internal properties, such as temperature, fan speed, and data protocols applied in the local data processing unit (such as a computer, workstation or mainframe), more current management units further allow visualization of data display on a remote display of the local data processing unit. For that purpose, the remote management unit is coupled to an internal bus (such as a PCI-bus) of the data processing unit. The remote management unit comprises a graphic chip allowing converting instructions received e.g. from the CPU into graphic signals to be sent to the remote data processing unit for monitoring the local data processing unit. The remote data processing unit receives the graphic information and can display that on a screen. However, disadvantageous in that solution is not only that an internal graphic processing unit (such as a graphic card) has to be disabled for allowing the remote visualization, but also that the remote management unit requires more sophisticated and thus costly components rendering application of such remote management units only for high-end applications.

### SUMMARY OF THE INVENTION

It is an object of the present invention to provide an improved data visualization of a local data processing unit in a remote data processing unit. The object is solved by the independent claims. Preferred embodiments are shown by the dependent claims.

According to the present invention, a remote management unit is coupled to an internal bus of a local data processing unit. Further coupled to the local bus is a graphics unit for providing a data display on a monitor of the local data processing unit. The graphics unit comprises a memory containing a digital representation of the current display on the local monitor. A central processing unit (CPU) and further functional units might also be coupled to the local bus subject to the specific application.

The remote management unit, situated in the local data processing unit, is adapted to be coupled to a remote data processing unit, e.g. via a data communication network or a wireless data transmission. The remote data processing unit is located physically remote from the local data processing unit. In order to enable the remote data processing unit to visualize the current content displayed on the local monitor of the local data processing unit, the remote management unit addresses the graphics memory of the graphics unit, reads out its current data content or at least parts of it, and transmits the read-out data content to the remote data processing unit. The remote data processing unit can then display or further process the received data.

In one embodiment, the remote management unit determines addresses of the graphics memory during an initialization process of the local data processing unit, wherein the graphics unit reports existence and size of the graphics memory to the CPU and receives in return valid addresses enabling other devices to address the graphics memory. The remote management unit monitors such initialization process and stores information about the current configuration of the local data processing unit and in particular the addresses of the graphics memory.

In a preferred embodiment, the local bus of the local data processing unit is a PCI-bus, and the remote management unit is preferably coupled at the same PCI-level of the local bus as the graphics unit, However, other bus-systems can be applied accordingly, whereby the data access of the remote management unit onto the graphics memory is determined by the specific protocol of the applied bus system.

In order to reduce effort required for the remote management unit to process the graphics data and also to improve data transfer speed, data-compression algorithms might be applied. In one embodiment a specific algorithm is used while reading data from a memory such as the graphics memory. For that purpose, the memory is divided into a plurality of sections. For each section, a characteristic property (e.g. the checksum of the data content of that section) is determined and stored. At a successive time unit, the sections of the memory are analyzed accordingly, and the characteristic property of that time unit is compared with the characteristic property of the foregoing or a previous time unit. In case that the current characteristic property is changed, it is assumed that the content of that section has been changed, and only the contents of such sections with changed characteristic property will be read out. Sections with unchanged characteristic property are assumed to still contain the same (unchanged) content.

In one embodiment for successively reading out a memory once per time unit, the content of this memory is first divided in a plurality of sections. During a first time unit, the content of each section is read out, and a characteristic property is determined for the content of each one of the sections. The determined characteristic property is stored for each section. At a second and at each successive time unit, the characteristic property will again be determined for the then present content of each section. In case the characteristic property of a section differs from the characteristic property stored for that section, it is assumed that the content of that section has been changed. In that case, the changed characteristic property will be stored for that section, and the content of that section will be read out. In case the currently determined characteristic property equals the value of the characteristic property stored for that section, it will be assumed that the content of that section has not been changed, and the stored value of the characteristic property is maintained (or refreshed), and no data will be read out from that section.

The accuracy of the applied data compression depends on the number and size of the sections and the ambiguity of the determined characteristic property. This data compression algorithm is in particular suitable for reading out stored graphics data.

For determining the characteristic property, each algorithm as known in the art can be applied in principle. Typical algorithms can be checksum, square root and (almost arbitrary) combinations of mathematical operations. The characteristic property is preferably only determined for a part of the content of each section, however, can also be determined for the entire section content.

For applying the preferred compression algorithm for reading out the graphics memory, the remote management unit divides the graphics memory into a plurality of sections. During each time unit, the remote management unit determines the characteristic property for each one of the sections, compares the determined characteristic properties with the corresponding stored characteristic properties, and either stores the changed characteristic property and reads out the content for that section, or maintains the stored value of the characteristic property without reading out that section.

It is clear that the invention can be partly or entirely embodied or supported by one or more suitable software programs, which can be stored on or otherwise provided by any kind of data carrier, and which might be executed in or by any suitable data processing unit.

### BRIEF DESCRIPTION OF THE DRAWINGS

Other objects and many of the attendant advantages of the present invention will be readily appreciated and become better understood by reference to the following detailed description when considering in connection with the accompanied drawings. Features that are substantially or functionally equal or similar will be referred to with the same reference sign(s).
- Figure 1: illustrates the principals of the present invention.
- Figure 2: illustrates an inventive memory reading out.

### DETAILED DESCRIPTION OF THE INVENTION

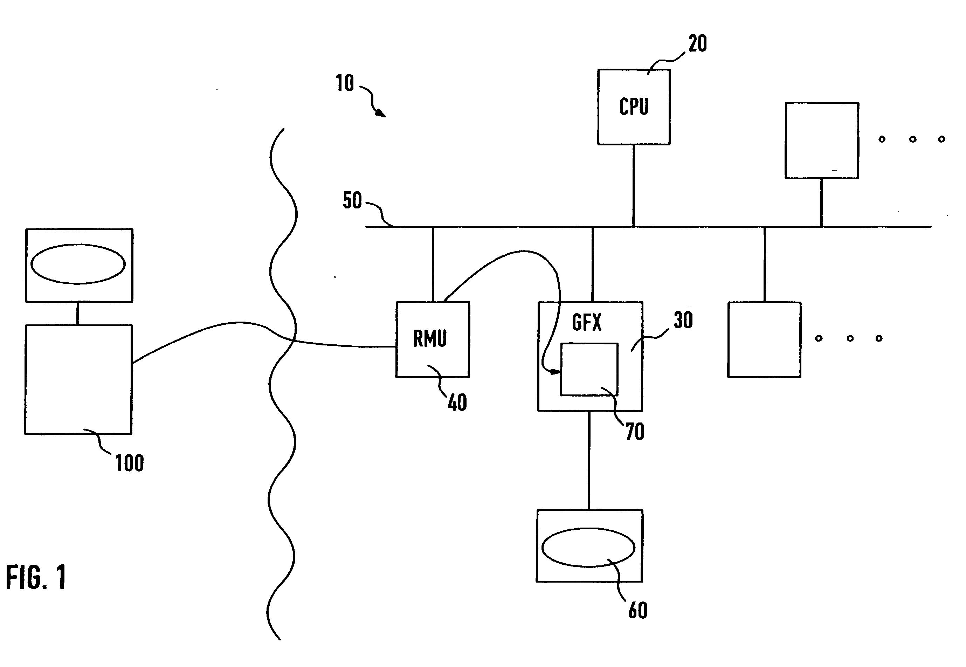

In Figure 1, a local data processing unit 10 comprises a CPU 20, a graphics unit (GFX) 30, and a remote management unit (RMU) 40, all coupled to an internal bus 50 of the local data processing unit 10. Further units might be coupled to the bus 50 (as indicated at the right side of Figure 1) but are not of interest here.

A display 60 is coupled to a graphics memory 70 of the graphics unit 30. The graphics memory 70 is provided for containing a digital representation of the image presently displayed by the display 60.

The remote management unit 40 can be coupled to a remote data processing unit 100, which can be physically located fare off from the local data processing unit 10.

The remote management unit 40 is preferably embodied by one of the Agilent Remote Management Cards eRMC (N2530), RMC (N2520), or pRMC (N2525) provided by the applicant Agilent Technologies.

Generally during an initialization process of the local data processing unit 10, the CPU 20 will initialize the graphics unit 30, and an address range will be assigned for the graphics memory 70. The remote management unit 40 is provided to monitor such initializing process and to store the assigned address range of the graphics memory 70.

The content of the graphics memory 70 is repeatedly updated in determined time units or intervals. This can be done by the graphics unit 30 or directly by other devices dependent on the specific application and set up of the local data processing unit 10. That means that the content of the graphics memory 30 is maintained unchanged during each time interval, and might be provided to the display 60 e.g. through analog to digital converters or other units.

The remote management unit 40 can address and read out the graphics memory 70 via the bus 50. The read out graphics information can be transferred to the remote data processing unit 100 and displayed thereby.

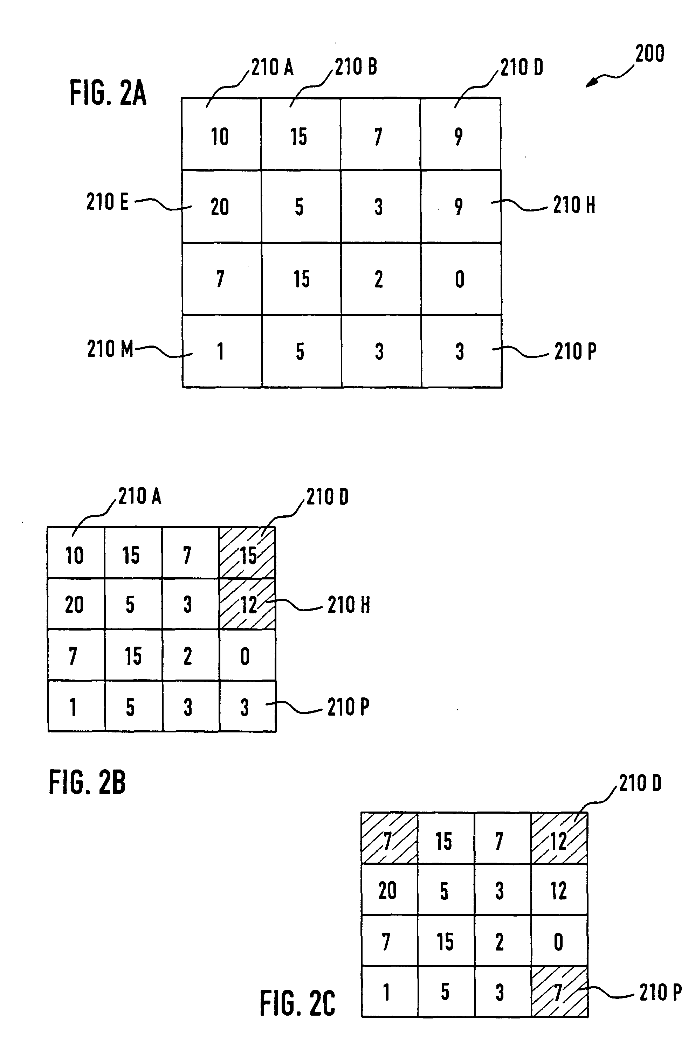

A preferred embodiment for reading out the graphics memory 70 shall now be explained in general terms. It will become clear that this reading out scheme is not limited to reading out the graphics memory 70 but can also be applied for other purposes. Figures 2 illustrate the inventive algorithm for efficiently memory reading out a generic memory 200. It goes without saying that the explanations for memory 200 apply accordingly to the graphics memory 70.

The memory 200 is divided into a plurality of sections 210. In the example of Figures 2A-2C, the memory 200 is divided into 16 sections 210 A to 210 P. Each section 210 represents a memory range of the memory 200 greater than its smallest memory cell.

The content of the memory 200 shall be repeatedly read out in successive time intervals. During a first time interval, the content of each one of the sections 210 is read out. Further for each one of the sections 210, a characteristic property for that section is determined and will also be stored.

In a preferred embodiment, the characteristic property is represented by a checksum determined from all or only a portion of the contents of each section 210. [Those sections represent the graphical data in form of pixels. Pixels are generally represented as digital numbers (e.g. 2, 4, 8 bits) associated with their respective color maps. In some representations, the color information of the pixel is directly associated with the digital number (16, 32 bits). A typical checksum algorithm looks at such section as a linear segment of integer data. Any standard CRC (Cyclic Redundancy Check) could be applied. For simplicity and speed, a very small subset of the section could be analyzed (for example 7 pixels). The simple addition of the 7 integer values representing that segment would deliver the checksum. As it is highly likely that almost all pixels within a segment change when the screen changes, it is sufficient to test a just subset of pixels. The example of Figure 2A shows arbitrary values of the characteristic properties assigned to each one of the sections 210. In Figure 2A, the characteristic property of section 210A is 10, 15 for section 210B, 7 for section 210C, and so on. The value of the characteristic property is stored for each one of the sections 210.

Figure 2B shows an (also arbitrary) example for the values of the characteristics properties determined for the sections 210 in a time interval successive to the time interval of Figure 2A. As apparent from Figure 2B, only the values of the characteristic properties of sections 210D and 210H have been changed. Hence, it is assumed that only those sections 210D and 210H have been changed, and only the contents of those sections 210D and 210H will be read out.

Figure 2C depicts the values of the characteristic property determined for each one of the sections 210 in a time interval successive to the time interval represented by Figure 2B. In the example of Figure 2C, the values of the characteristic property have been changed only in the sections 210D and 210P. In accordance with the aforesaid, only the changed values of the characteristic property of sections 210A, 210D and 210P will be amended and newly stored, while the values of the characteristic property of the other sections 210 will be maintained unchanged. Further, the content of the sections 210A, 210D and 210P will be assumed to have been changed and (only those sections 210A, 210D and 210P) will be read out.

Thus, only a limited number of sections 210 wherein the value of the characteristic property has been changed will be read out. This can lead to a significantly reduced effort for reading out the memory 200 in case that its content is only changed partially between successive time intervals for reading out the memory 200. This represents a compression of the data stream required for successively reading out the memory 200.

The remote management unit 40 applies the above described compression algorithm for successively reading out the graphics memory 70. Thus, the resources required for reading out and storing the content of the graphics memory 70 can be reduced. However, an increased effort has to be spent by the remote management unit 40 for repeatedly determining and storing the values of the characteristic property for each one of the sections 210 into which the graphics memory 70 has been logically divided by the remote management unit 40.

## Claims

1. A remote management unit (40) adapted to be coupled to an internal bus (50) of a local data processing unit (10) having a graphics unit (30), coupled to the internal bus (50), for providing a data display on a monitor (60) of the local data processing unit (10), the graphics unit (30) comprising a graphics memory (70) adapted for containing a digital representation of the current display for the local monitor (60), wherein:
the remote management unit (40) is adapted to provide - independent of the local data processing unit (10) - a data communication with a remote data processing unit (100) located remote from the local data processing unit (10), and
the remote management unit (40) is adapted - independent of the local data processing unit (10) - for addressing the graphics memory (70), reading out data content of the graphics memory (70), and transmitting the read-out data content to the remote data processing unit (100).

2. The remote management unit (40) of claim 1, wherein the internal bus (50) is a PCI-bus.

3. The remote management unit (40) of claim 2 being coupled at the same PCI-level of the internal bus (50) as the graphics unit (30).

4. A method for providing a data visualization from a local data processing unit (10) to a remote data processing unit (100) located remote from the local data processing unit (10), wherein a graphics unit (30) adapted for providing a data display on a local monitor (60) is coupled to an internal bus (50) of the local data processing unit (10), and the graphics unit (30) comprises a graphics memory (70) adapted for containing a digital representation of the current display for the local monitor (60), the method comprising the steps to be executed by a remote management unit (40) according to claim 1 or any one of the above claims independent of the operation of the local data processing unit (10) -of:
(a) addressing the graphics memory (70),
(b) reading out data content of the graphics memory (70), and
(c) transmitting the read-out data content to the remote data processing unit (100).

5. The method of claim 4, further comprising prior to step (a) a step of determining addresses of the graphics memory (70) during an initialization process of the local data processing unit (10) wherein the graphics unit (30) reports existence and size of the graphics memory (70) and receives in return valid addresses assigned for the graphics memory (70).

6. The method of claim 5, comprising the steps of monitoring the initialization process and storing the assigned addresses for the graphics memory (70).

7. The method of claim 4 or 5, wherein step (b) comprises a step (b1) of compressing data content of the graphics memory (70).

8. The method of claim 7, wherein step (b1) comprises for reading out the data content of the graphics memory (70) the steps of:
(1) dividing the memory (200; 70) into a plurality of sections (210),
(2) during a first time interval:
(2.1) determining a characteristic property for each section (210),
(2.2) storing the determined characteristic property for each section (210), and
(2.3) reading out the data content of each section (210);
(3) during successive time intervals:
(3.1) determining the characteristic property for each section (210),
(3.2) determining modified sections (210) as such sections (210) for which the determined characteristic property deviates from the stored characteristic property,
(3.3) storing the determined characteristic property for the determined modified sections (210), and
(3.4) reading out the data content of the determined modified sections (210).

9. The method of claim 8, wherein the characteristic property is determined for a part of the content of each section (210).

10. The method of claim 8 or 9, wherein the characteristic property is determined by determining a checksum for each section (210).

11. A software program or product, preferably stored on a data carrier, for executing one of the methods of claims 4-10 when run on a data processing system such as a computer.

## Patentansprüche

1. Eine entfernte Verwaltungseinheit (40), die angepasst ist, an einen internen Bus (50) einer lokalen Datenverarbeitungseinheit (10) mit einer Graphikeinheit (30), die an den internen Bus (50) gekoppelt ist, gekoppelt zu werden, zum Vorsehen einer Datenanzeige auf einem Monitor (60) der lokalen Datenverarbeitungseinheit (10), wobei die Graphikeinheit (30) einen Graphikspeicher (70) aufweist, der angepasst ist, eine digitale Darstellung der aktuellen Anzeige des lokalen Monitors (60) aufzuweisen, wobei:
die Graphikeinheit (40) angepasst ist, - unabhängig von der lokalen Datenverarbeitungseinheit (10) - eine Datenkommunikation mit einer entfernten Datenverarbeitungseinheit (100) vorzusehen, welche sich entfernt von der lokalen Datenverarbeitungseinheit (10) befindet, und
die entfernte Verwaltungseinheit (40) angepasst ist, - unabhängig von der lokalen Datenverarbeitungseinheit (10), den Graphikspeicher (70) zu adressieren, Dateninhalt des Graphikspeichers (70) auszulesen und den ausgelesenen Inhalt an die entfernte Datenverarbeitungseinheit (100) zu übermitteln.

2. Die entfernte Verwaltungseinheit (40) nach Anspruch 1, wobei der interne Bus (50) ein PCI-Bus ist.

3. Die entfernte Verwaltungseinheit (40) nach Anspruch 2, wobei die Einheit auf demselben PCI-Niveau des internen Busses (50) gekoppelt ist wie die Graphikeinheit (30).

4. Ein Verfahren zum Liefern einer Datenanzeige von einer lokalen Datenverarbeitungseinheit (10) an eine entfernte Datenverarbeitungseinheit (100), die sich entfernt von der lokalen Datenverarbeitungseinheit (10) befindet, wobei eine Graphikeinheit (30), die angepasst ist zum Vorsehen einer Datenanzeige auf einem lokalen Monitor (60), an den internen Bus (50) der lokalen Datenverarbeitungseinheit (10) gekoppelt ist, und die Graphikeinheit (30) einen Graphikspeicher (70) aufweist, der angepasst ist, eine digitale Darstellung der aktuellen Anzeige des lokalen Monitors (60) aufzuweisen, wobei das Verfahren die Schritte aufweist, die durchzuführen sind durch eine entferne Verwaltungseinheit (40) nach Anspruch 1 oder einem der oben genannten Ansprüche, unabhängig vom Betrieb der lokalen Datenverarbeitungseinheit (10):
a) Adressieren des Graphikspeichers (70),
b) Auslesen des Dateninhalts aus dem Graphikspeicher (70), und
c) Übermitteln des ausgelesenen Inhalts an die entfernte Datenverarbeitungseinheit (100).

5. Das Verfahren nach Anspruch 4 mit zusätzlich vor Schritt (a) einem Schritt zum Ermitteln von Adressen des Graphikspeichers (70) während eines Initalisierungsprozesses der lokalen Datenverarbeitungseinheit (10), wobei die Graphikeinheit (30) Existenz und Größe des Graphikspeichers (70) berichtet und im Gegenzug gültige Adressen erhält, die für den Graphikspeicher zugeordnet sind.

6. Das Verfahren nach Anspruch 5 mit den Schritten, den Initialisierungsprozess anzuzeigen und die für den Graphikspeicher (70) zugeordneten Adressen zu speichern.

7. Das Verfahren nach Anspruch 4 oder 5, wobei Schritt (b) einen Schritt (b1) aufweist zum Komprimieren von Dateninhalt des Graphikspeichers.

8. Das Verfahren nach Anspruch 7, wobei Schritt (b1) zum Auslesen des Dateninhalts aus dem Graphikspeicher (70) folgende Schritte aufweist:
1) Teilen des Speichers (200; 70) in eine Vielzahl von Sektionen (210),
2) Während eines ersten Zeitintervalls:
2.1) Ermitteln einer charakteristischen Eigenschaft für jede Sektion (210),
2.2 ) Speichern der ermittelten charakteristischen Eigenschaft für jede Sektion (210), und
2.3) Auslesen des Dateninhalts jeder Sektion (210);
3) Während der folgenden Zeitintervalle:
3.1) Ermitteln der charakteristischen Eigenschaft für jede Sektion (210),
3.2) Ermitteln modifizierter Sektionen (210) als solche Sektionen, für welche die ermittelte charakteristische Eigenschaft abweicht von der gespeicherten charakteristischen Eigenschaft,
3.3) Speichern der ermittelten charakteristischen Eigenschaft für die ermittelten modifizierten Sektionen (210), und
3.4 Auslesen des Dateninhalts der ermittelten modifizierten Sektionen (210).

9. Das Verfahren nach Anspruch 8, wobei die charakteristische Eigenschaft für einen Teil des Inhalts jeder Sektion (210) ermittelt wird.

10. Das Verfahren nach Anspruch 8 oder 9, wobei die charakteristische Eigenschaft ermittelt wird durch Ermitteln einer Prüfsumme für jede Sektion (210).

11. Ein Softwareprogramm oder -produkt, vorzugsweise gespeichert auf einem Datenträger zum Ausführen eines der Verfahren der Ansprüche 4-10, wenn es auf einem Datenverarbeitungssystem wie einem Computer ausgeführt wird.

## Revendications

1. Unité de gestion à distance (40) adaptée pour être couplée à un bus interne (50) d'une unité de traitement local de données (10) disposant d'une unité graphique (30), couplée au bus interne (50), destinée à fournir un affichage de données sur un moniteur (60) de l'unité de traitement local de données (10), l'unité graphique (30) comprenant une mémoire graphique (70) adaptée pour contenir une représentation numérique de l'affichage en cours pour le moniteur local (60), dans laquelle :
l'unité de gestion à distance (40) est adaptée pour fournir - indépendamment de l'unité de traitement local de données (10) - une communication de données avec une unité de traitement à distance de données (100) située à distance de l'unité de traitement local de données (10), et
l'unité de gestion à distance (40) est adaptée - indépendamment de l'unité de traitement local de données (10) - pour adresser la mémoire graphique (70), lire le contenu des données de la mémoire graphique (70), et transmettre le contenu des données lues à l'unité de traitement à distance de données (100).

2. Unité de gestion à distance (40) selon la revendication 1, dans laquelle le bus interne (50) est un bus PCI.

3. Unité de gestion à distance (40) selon la revendication 2 étant couplée au même niveau PCI du bus interne (50) que l'unité graphique (30).

4. Méthode pour fournir une visualisation de données à partir d'une unité de traitement local de données (10) vers une unité de traitement à distance de données (100) située à distance de l'unité de traitement local de données (10), dans laquelle une unité graphique (30) adaptée pour fournir un affichage de données sur un moniteur local (60) est couplée à un bus interne (50) de l'unité de traitement local de données (10), et l'unité graphique (30) comprend une mémoire graphique (70) adaptée pour contenir une représentation numérique de l'affichage en cours pour le moniteur local (60), ladite méthode comprenant les étapes pour être exécutée par une unité de gestion à distance (40) selon la revendication 1 ou l'une quelconque des revendications précédentes indépendamment de l'exploitation de l'unité de traitement local de données (10) - de :
(a) l'adressage de la mémoire graphique (70),
(b) la lecture du contenu des données de la mémoire graphique (70), et
(c) la transmission du contenu des données lues à l'unité de traitement à distance de données (100).

5. Méthode selon la revendication 4, comprenant en outre, avant l'étape (a), une étape de détermination des adresses de la mémoire graphique (70) durant un processus d'initialisation de l'unité de traitement local de données (10) dans laquelle l'unité graphique (30) fait état de l'existence et de la taille de la mémoire graphique (70) et reçoit en retour des adresses valides attribuées pour la mémoire graphique (70).

6. Méthode selon la revendication 5, comprenant les étapes de la surveillance du processus d'initialisation et du stockage des adresses attribuées pour la mémoire graphique (70).

7. Méthode selon la revendication 4 ou 5, dans laquelle l'étape (b) comprend une étape (b1 ) de compression du contenu des données de la mémoire graphique (70).

8. Méthode selon la revendication 7, dans laquelle l'étape (b1) comprend pour la lecture du contenu des données de la mémoire graphique (70) les étapes de :
(1) la division de la mémoire (200 ; 70) en une multitude de sections (210),
(2) durant un intervalle de début :
(2.1) détermination d'une propriété caractéristique pour chaque section (210),
(2.2) stockage de la propriété caractéristique déterminée pour chaque section (210), et
(2.3) lecture du contenu des données de chaque section (210);
(3) durant les intervalles consécutifs :
(3.1 ) détermination d'une propriété caractéristique pour chaque section (210),
(3.2) détermination des sections modifiées (210) en tant que sections (210) pour lesquelles la propriété caractéristique déterminée dévie de la propriété caractéristique stockée,
(3.3) stockage de la propriété caractéristique déterminée pour les sections modifiées déterminées (210), et
(3.4) lecture du contenu des données des sections modifiées déterminées (210).

9. Méthode selon la revendication 8, dans laquelle la propriété caractéristique est déterminée pour une partie du contenu de chaque section (210).

10. Méthode selon la revendication 8 ou 9, dans laquelle la propriété caractéristique est déterminée en déterminant une somme de contrôle pour chaque section (210).

11. Programme ou produit logiciel, de préférence stocké sur un support de données, pour l'exécution d'une des méthodes selon les revendications 4 à 10 si exécutées sur un système de traitement des données tel qu'un ordinateur.
